# EUROPÄISCHE PATENTSCHRIFT

(11) **EP 1 176 304 B1**
(45) Veröffentlichungstag und Bekanntmachung des Hinweises auf die Patenterteilung: **17.09.2003**
(21) Anmeldenummer: 01122602.4
(22) Anmeldetag: 23.12.1998
(51) Int. Cl.: F02M 61/00, H01M 8/00

(54) **Brennstoffeinspritzdüse**
Injector
Injecteur

(30) Priorität: 28.12.1997 DE 19757786
(43) Veröffentlichungstag der Anmeldung: 30.01.2002
(62) Teilanmeldung aus: 98966402.4
(73) Patentinhaber: Rennebeck, Klaus, 73240 Wendlingen (DE)
(72) Erfinder: Rennebeck, Klaus, 73240 Wendlingen (DE)
(74) Vertreter: Patentanwälte Hosenthien-Held und Dr. Held

(56) Entgegenhaltungen:
- WO-A-97/26225
- DE-A- 3 938 779
- DE-A- 4 435 163
- US-A- 4 586 226

## Beschreibung

Die vorliegende Erfindung betrifft eine Brennstoff einspritzdüse. Die vorliegende Anmeldung ist eine Teilanmeldung. Die frühere Anmeldung betrifft eine Brennstoffzelleneinheit zur Gleichstromerzeugung durch Umwandlung chemischer Energie mit einem Elektrolyten, welcher getrennt von-einander Anode und Kathode trägt. Sie betrifft darüber hinaus einen Brennstoffzellenstack, der aus mehreren derartigen Brennstoffzelleneinheiten zusammen-gesetzt ist sowie die Verwendung einer derartigen Brennstoff zelleneinheit.

Brennstoffzellen dienen, wie dies allgemein bekannt ist, der Stromerzeugung, genauer ausgedrückt, der Umwandlung von chemischer in elektrische Energie. Dabei werden an der Anode unter Freisetzung von Wasserstoffionen Elektronen abgegeben, die die Anode negativ aufladen. Somit finden an den Feststoffelektrolyten-Oberflächenschichten zwei Reaktionen statt, jeweils eine an der Anode und an der Kathode, welche zusammen das Prinzip der Brennstoffzellenreaktion darstellen. Aus der Anode (Pluspol) wird der Elektrodenstrom über einen Stromverbraucher zu der Kathode (Minuspol) geleitet. Gleichzeitig mit der Erzeugung des Elektronenflusses von der Anode zur Kathode findet die Emission des Reaktionsproduktes, beispielsweise von Wasser bzw. Wasserdampf (Aquadestillata- oder Kondensat-Emission), aus der Brennstoffzelle statt. Für den Betrieb einer Brennstoffzelle wird eine Versorgung mit Brennstoff bzw. Betriebsstoff benötigt, der beispielsweise aus Wasserstoff oder einem Wasserstoffträger bestehen kann. Der Brennstoff muß zur katalytischen Anode, der Sauerstoff oder Sauerstoffträger, d.h. das Oxidationsmittel, zur Oberfläche der Kathode, die durch den Elektrolyten von der Anode getrennt ist, befördert werden. Bei einem Ideal-Elektrolyten einer Brennstoffzelle findet eine Stromerzeugung bei einer Spannung von 1,23 Volt statt.

Ein Beispiel einer Brennstoffzelle, bei der Anode und Kathode plattenförmig ausgebildet und beiderseits eines ebenfalls plattenförmigen Elektrolyten angeordnet sind, ist in der US-A-5 418 079 offenbart. Derartige plattenförmige Elektrolyten haben den Nachteil, eine relativ große Dicke aufweisen zu müssen, um eine ausreichende Stabilität fiir die Handhabung zu gewährleisten. Da sich jedoch mit der Zunahme der Elektolytdicke auch der Diffusionsweg der Ionen verlängert, was zu einer erhöhten Anspringtemperatur der Brennstoffzelle führt, sind derartige Plattenelektrolyten nur bedingt für den Einsatz in Brennstoffzellen geeignet. Zudem weisen derartige Brennstoffzellen bei einem vorgegebenen Volumen nur eine geringe aktive Oberfläche fiir die elektrochemische Reaktion auf.

Der früheren Anmeldung liegt demzufolge die Aufgabe zugrunde, eine Brennstoffzelleneinheit anzugeben, die auf kleinstmöglichem Raum eine große reaktive Oberfläche aufweist, die einfach herzustellen ist und bezüglich ihrer Verwendung eine hohe Flexibilität aufweist.

Die Brennstoffzelleneinheit zur Gleichstromerzeugung durch Umwandlung chemischer Energie mit einem Elektrolyten, welcher getrennt voneinander Anode und Kathode trägt, weist demzufolge einen Mikrohohlfaser-Matrixelektrolyten auf, wobei die Mikrohohlfasern eine Wandstärke von etwa 0,01 bis 50 µm und einen gleichwertigen Außendurchmesser von etwa 0,05 bis 280 µm aufweisen, wobei die Mikrohohlfasern entweder in Form von Filament- oder Filamentgarngelegen angeordnet sind, wobei die Mikrohohlfaserenden formstabil gebunden sind und fiir den Zugang zum Hohlfaserlumen zumindest partiell freigelegt sind, oder in Form von Stapelfaser- oder Stapelfasergarngelegen angeordnet sind, wobei die Mikrohohlfaserenden formstabil gebunden sind.

Durch die Brennstoffzelleneinheit läßt sich bei kleinem Raumbedarf eine hohe aktive Fläche, beispielsweise etwa 11.000 cm² pro cm³ Brennstoffzellenvolumen, erreichen. Unter einem gleichwertigen Durchmesser wird, wie dies allgemein bekannt ist, bei geometrischen Gebilden mit lediglich näherungsweise kreisförmigem Querschnitt der Durchmesser desjenigen fiktiven Kreises verstanden, dessen Fläche gleich der Querschnittsfläche des geometrischen Gebildes ist. Im vorliegenden Text werden als Filamentgelege Schichtungen aus Fasern bezeichnet, bei denen mindestens einige der Fasern eine oder mehrere Windungen aufweisen, wohingegen sich die Fasern in Stapelfasergelegen ohne Windungen erstrecken. Garngelege zeichnen sich dadurch aus, daß mehrere Fasern bzw. Filamente miteinander verdrillt sind.

Da der Feststoffelektrolyt als Hohlfaser, d.h. als Kapillar- oder Hohlprofil, ausgebildet ist, lassen sich geringe Wandstärken des Elektrolyten ohne mechanische Stabilitätsprobleme verwirklichen. Ein weiterer Vorteil besteht darin, daß Mikrohohlfasern mit den genannten Abmessungen textile Eigenschaften aufweisen und sich aus diesem Grund leicht verformen lassen, ohne zu zerbrechen. Die inneren und äußeren Oberflächen der Mikrohohlfasem sind für ihre Funktion als Anode oder Kathode aktiviert. Die Art der Aktivierung ist von den jeweiligen für die Mikrohohlfasern gewählten Materialien abhängig. Beispielsweise ist eine Aktivierung durch eine geeignete Beschichtung denkbar.

Die Wandstärke der Mikrohohlfasern liegt vorzugsweise zwischen etwa 0,05 und 10 µm, insbesondere zwischen etwa 0,05 und 5 µm. Dabei liegt der gleichwertige Außendurchmesser der Mikrohohlfasern vorzugsweise zwischen etwa 1 und 100 µm, insbesondere zwischen etwa 2 und 25µm. Die konkrete Auswahl der geeigneten Durchmesser und Wandstärken ist in Abhängigkeit von den verwendeten Materialien zu treffen. Die angegebenen unteren Werte für Wandstärke und Durchmesser sind insbesondere durch die Möglichkeiten der Herstellung bedingt.

Gemäß einer bevorzugten Ausführungsform sind die Gelege in Form einer Diskusscheibe angeordnet, wobei die Mikrohohlfaserenden so eingebunden sind, daß ein stabiler, selbsttragender Diskusscheibenring gebildet ist, an dessen äußerer ringförmiger Umfangsfläche die offenen Mikrohohlfaserenden freiliegen. Die Diskusscheibe kann, im Querschnitt gesehen, eine ebene Scheibe darstellen oder auch in Form einer Wellpappelage ausgebildet sein. Die das Gelege bildenden Mikrohohlfasern weisen vorzugsweise einen gleichwertigen Außendurchmesser von etwa 0,5 µm bis 100 µm sowie eine Länge von vorzugsweise etwa 50 mm bis 1000 mm auf. Auf diese Weise läßt sich in einem Volumen, das etwa 3 bis 5 Stück DIN A 4 Bogen entspricht, eine Elektrolytoberfläche von etwa 1m² erreichen.

Da die Mikrohohlfasern an beiden Enden offen sind, entspricht ihre Länge der Länge des Lumens bzw. Kanals, auf dessen Innenoberfläche entweder die Anode oder Kathode aufgebracht ist. Besonders bevorzugt wird eine Länge von etwa 300 mm. Die gewählte Länge der Mikrohohlfasern entspricht bevorzugt dem Durchmesser des Diskusscheibenringes. Die Mikrohohlfaserlänge kann auch durch Umlegen bzw. Biegen der Mikrohohlfaser ein Vielfaches des Diskusscheibendurchmessers betragen. Für die Dicke des Ringes haben sich Werte zwischen etwa 1 mm und 35 mm als besonders geeignet erwiesen, damit die Funktion des Diskusscheibenringes als Formstabilisator erfüllt wird. Die Höhe des Diskusscheibenringes beträgt vorzugsweise etwa 0,5 mm bis 15 mm. Diese Höhe ist ausreichend, um mehrere Mikrohohlfaserlagen übereinander aufzunehmen. Ein derartiger Ring ist für einen Stack aus mehreren Brennstoffzelleneinheiten geeignet.

Alternativ dazu können die Gelege auch in Form eines Vielecks, insbesondere eines Rechtecks, angeordnet sein, wobei die Hohlfaserenden so eingebunden sind, daß ein stabiler, selbsttragender, vieleckiger, insbesondere rechteckiger, Rahmen gebildet ist, an dessen äußerer Umfangsfläche die offenen Mikrohohlfaserenden freiliegen. Die einzelnen Mikrohohlfasern können in diesem Fall entweder parallel zueinander oder über Kreuz angeordnet sein, wobei die Länge der Mikrohohlfasern vorzugsweise etwa der Länge bzw. Breite des Rahmens entspricht.

Vorzugsweise sind die Mikrohohlfasern aus Polymermaterialien, Metall, Keramik und/oder textilen Materialien hergestellt. Es können jedoch beliebige andere geeignete Materialien verwendet werden. Dabei können die Materialien sowohl oxidisch als auch nicht oxidisch sein. Falls nicht fluorierte Polymermaterialien fiir die Herstellung der Mikrohohlfasern ausgewählt werden, kann die Aktivierung der Oberfläche beispielsweise durch Sulfonieren erfolgen.

Von besonderem Vorteil haben sich solche Mikrohohlfasern im Rahmen der vorliegenden Erfindung erwiesen, die aus der internationalen Anmeldung WO 97/26225 hervorgehen. Es handelt sich dabei um Mikrohohlfasern aus kermischem Material bzw. den entsprechenden Grünlingen. Wird im Zusammenhang hiermit von einem "keramischen Material" gesprochen, dann ist dieses in weitestem Sinne zu verstehen. Es handelt sich um eine Sammelbezeichnung für aus anorganischen und überwiegend nicht metallischen Verbindungen oder Elementen aufgebauten Materialien, die insbesondere zu mehr als 30 Vol.-% kristallisierte Materialien darstellen. In diesem Zusammenhang sei auf Römpp Chemie Lexikon, 9. Aufl., Band 3, 1990, S. 2193 bis 2195 verwiesen. Vorzugsweise bestehen die Keramikmikrohohlfasern aus einem oxidischen, silicatischen, nitridischen und/oder carbidischen Keramikmaterial. Besonders bevorzugt sind solche Keramikhohlfasern auf der Basis von Aluminiumoxid, Calciumphosphat (Apatit) oder verwandten Phosphaten, Porzellan- oder Cordierit-artigen Zusammensetzungen, Mullit, Titanoxid, Titanaten, Zirkonoxid, Zirkonsilikat, Zirkonaten, Spinellen, Smaragd, Saphir, Korund, Nitriden oder Carbiden von Silicium oder anderen chemischen Elementen oder deren Mischungen. Als Dotierungsmittel werden gegebenenfalls die in der Keramik bekannten Stoffe, wie MgO, CaO, ZrO₂, ZrSiO₄, Y₂O₃ u.a. oder deren Vorläufer den anorganischen Hauptbestandteilen zugesetzt.

Zur Herstellung dieser Mikrohohlfasern wird vorzugsweise eine Emulsion, Dispersion und/oder Supension, die den Vorläufer eines keramischen Materials und ein unter Hitzeeinwirkung entfernbares Bindemittel enthält, in an sich bekannter Weise zu grünen Mikrohohlfasern ausgeformt und das Bindemittel unter Hitzeeinwirkung entfernt. Alternativ kann die Dispersion auf eine Seele aus einer organischen Kompaktfaser aufgebracht werden, wobei anschließend sowohl die Seele als auch die Bindemittel unter Hitzeeinwirkung entfernt werden. Die Dispersion kann. wechselnde Mengen, z.b. bis zu 95 Gew.-%, vorzugsweise etwa 40 bis 70 Gew.-%, an Dispersionsmedium enthalten. Ein Dispersionsmedium kann auch entfallen, wenn das Bindemittel z.B. thermoplastisch ist und ohne nennenswerte Zersetzung zu einer niedrig-viskosen Masse aufgeschmolzen werden kann.

Als oben bezeichnete keramische Vorläufer bzw. Precursor kommen insbesondere in Frage: Tonminerale, insbesondere Kaolin, Illit, Montmorillit, Metallhydroxide, wie Aluminiumhydroxid, gemischte Metallhydroxide/-oxide, wie AlOOH, gemischte Metalloxide/halogenide, Metalloxide, wie BeO, MgO, Al₂O₃, ZrO₂ und ThO₂, Metallnitrate, wie Al(NO₃)₃, Metallalkoholate, insbesondere Aluminiumalkoholate, wie Al(iPrO)₃, Al(*sec*-BuO)₃, Magnesium-Alumosilicate, Feldspäte, Zeolithe, Böhmrite oder Mischungen zweier oder mehrerer der genannten Materialien.

Bei der Wahl des unter Hitzeeinwirkung entfernbaren Bindemittels besteht im Rahmen der Erfindung keine kritische Beschränkung. Es ist allerdings bevorzugt, daß das Bindemittel filmbildend ist. Dabei kann es sich beispielsweise um Harnstoff, Polyvinylalkohol, Wachs, Gelatine, Agar, Eiweiß, Saccharide handeln. Gegebenenfalls können zusätzlich organische Hilfsmittel, wie Binder, Stellmittel, Entschäumer und Konservierer herangezogen werden. Die Mischung aus demVorläufer des keramischen Materials und dem unter unter Hitzeeinwirkung entfernbaren Bindemittel liegt in Form einer Dispersion vor, wobei dieser Begriff weitgefaßt zu sehen ist. Es kann sich dabei insbesondere um Emulsionen und Suspensionen handeln, die regelmäßig in Form einer Paste vorliegen. Bei der Wahl des Dispersionsmediums besteht weitgehende Freiheit. Im allgemeinen wird es Wasser sein. Denkbar ist jedoch auch als Flüssigkeit ein organisches Lösungsmittel, wie ein Alkohol oder Aceton, gegebenenfalls auch in Vermischung mit Wasser. Besonders vorteilhaft sind hier sogenannte Sol-Gel-Prozesse, z.B. auf der Basis des bereits angesprochenen Polyvinylalkohols.

Hervorzuheben ist, daß bereits der oben angesprochene Grünling der Mikrohohlfaser grundsätzlich ebenfalls eingesetzt werden kann. Insbesondere ist es hierbei vorteilhaft, den Grünling der Mikrohohlfaser nachträglich zu sulfonieren. Dies hat zur Folge, daß die wünschenswerte Protonenleitfähigkeit verbessert wird.

Zur Herstellung der oben bezeichneten Mikrohohlfasern wie auch der entsprechenden Grünlinge wird inbesondere im Rahmen eines Spinnverfahrens so vorgegangen, daß die Dispersion in einen Aufgabebehälter oder Druckgefäß einer Spinnvorrichtung gegeben, die Dispersion strömend bei einer Temperatur von etwa 20 bis 400°C durch die Spinnvorrichtung gefördert und durch Düsenringöffnungen oder Düsenprofilöffnungen gepreßt wird. Die im Bereich der Düsenöffnungen erzeugten Teilströme werden mittig durch Kerne oder durch Einrichtungen zum Einblasen eines Gases geteilt, und die Teilströme werden durch Erwärmen, durch Bestrahlen oder durch Zutritt eines Reaktionspartners zu grünen Mikrohohlfasern verfestigt und dann gegebenenfalls zu dichten Mikrohohlfasern gebrannt. Weitere Einzelheiten gehen aus der bereits erwähnten internationalen Anmeldung WO 97/26225 hervor.

Es ist außerdem möglich, die Haare des Fells solcher Tierarten als Mikrohohlfasern zu verwenden, deren Fellhaare ein inneres Lumen aufweisen. Die Fellhaare weisen aufgrund ihrer Eiweißbestandteile eine hohe Protonenleitfähigkeit auf und sind deshalb für die Brennstoffzelleneinheit geeignet.

In Abhängigkeit von der beabsichtigten Anwendung sowie dem beabsichtigten Brennstoffeinsatz kann die Brennstoffzelleneinheit als PEM-, DM- und SO-Brermstoffzelleneinheit vorliegen. Wie dies bekannt ist, stehen die Abkürzungen "PEM", "DM" und "SO" jeweils für die Ausdrücke "Proton Exchange Membrane", "Direct Membrane" und "Solid Oxide". Für PEM-Brennstoffzelleneinheiten eignen sich insbesondere die polymeren Grünlinge der Mikrohohlfasem, wohingegen die Mikrohohlfasern in gebranntem Zustand besonders für die Herstellung von SO-Brennstoffzelleneinheiten geeignet sind. Als Ausgangsmaterial fiir Hochtemperatur-Brennstoffzellen kann Zirkoniumdioxid und insbesondere Zirkonium, da dieses Metall ein hohes Absorptionsvermögen für Wasser aufweist, empfohlen werden. Des weiteren haben sich die Materialien PEEK (Polyetheretherketon) sowie Victrex® bewährt. Durch eine geeignete Materialauswahl läßt sich somit jede beliebige Art von Brennstoffzelle herstellen.

Die Anode kann sowohl an den Lumeninnenflächen der Mikrohohlfasern als auch an den Außenumfangsoberflächen der Mikrohohlfasern angebracht sein. Es wird jedoch aus anwendungstechnischen Gründen, auf die später noch näher eingegangen werden wird, bevorzugt, daß sich die Anode auf dem Außenumfang des Elektrolyten und die Kathode an der Lumeninnenoberfläche der jeweiligen Mikrohohlfaser befinden.

Gemäß einer besonders bevorzugten Ausführungsform ist die Brennstoffzelleneinheit mit einem Mikrowellenabschirmkäfig versehen. Dieser dient dazu, die Strahlen einer Mikrowellenheizung abzuschirmen, welche häufig dafür verwendet wird, die Brennstoffzelle auf ihre Anspringtemperatur, d.h. die Temperatur, bei der die elektrochemische Reaktion stattfindet, aufzuheizen.

Um Kurzschlüsse zwischen den einzelnen den Matrixelektrolyten bildenden Mikrohohlfasern zu vermeiden, kann ein Kurzschlußschutz in Form von Wendelfasern mit nicht aktivierter Oberfläche vorgesehen sein, die die Mikrohohlfasern umschlingen und mit deren Enden fest verbunden sind.

Die Brennstoffzelleneinheiten können zu einem Brennstoffzellenstack zusammengesetzt sein, wodurch sich die Leistung der einzelnen Brennstoffzelleneinheiten nahezu beliebig vervielfachen läßt. In einem derartigen Stack können die einzelnen Brennstoffzelleneinheinten so eingebettet bzw. vergossen sein, daß ein stabiler, selbsttragender Rahmen gebildet wird. Dieser Rahmen kann in beliebiger Form ausgeführt sein, beispielsweise als Diskusscheibenring, wie bereits vorstehend erläutert.

Die einzelnen Brennstoffzelleneinheiten des Brennstoffzellenstacks können wellenförmig oder stegplattenförmig ausgebildet sein. In dieser Ausgestaltung lassen sich die einzelnen Brennstoffzelleneinheiten leicht aufeinandersetzen.

Der Brennstoffzellenstack kann mindestens eine Brennstoffzelleneinheit mit nicht aktivierten Elektrodenoberflächen als Wärmetauscher und/oder Luftfilter aufweisen. Hierin ist ein besonderer Vorteil der Ausgestaltung der Brennstoffzelleneinheit mit einem Matrix-Elektrolyten aus Mikrohohlfasern zu sehen. Die Wärmetauscher und/oder Luftfilter können nämlich aus stoff- und morphologiegleichen Matrix-Elektrolyt-Filamenten bestehen, mit dem einzigen Unterschied, daß ihre Oberflächen nicht aktiviert sind, so daß die zur Stromerzeugung gewünschte chemische Reaktion auf ihnen nicht stattfinden kann. Die Brennstoffzelleneinheit bzw. der Brennstoffzellenstack kann auf diese Weise besonders einfach und in wenigen Schritten hergestellt werden, wobei mehrere Elemente (Brennstoffzelleneinheiten, Wärmetauscher, Luftfilter usw.) zunächst als identische Elemente hergestellt werden und anschließend durch eine gezielte Aktivierung einzelner Mikrohohlfasern eine Aufteilung der Funktionen vorgenommen werden kann.

Die Matrix-Elektrolyten aus Mikrohohlfasem können durch Verzwirnen (beispielsweise Seilen oder Klöppeln) zu den jeweiligen Brennstoff-Einzelzellen verarbeitet werden. Die Mikrohohlfasern mit nicht aktivierter Oberfläche, die als Wärmetauscher und/oder Luftfilter dienen, werden vorzugsweise auf die als Elektrolyten fungierenden Mikrohohlfasern elektrisch isoliert so aufgebracht, daß sie diese letzteren wendelförmig umschlingen. Die isolierte Wendelumschlingung ist dabei vorzugs-weise an den Matrixenden der Brennstoff-Einzelzellen mit den als Elektrolyten dienenden Mikrohohlfasern fest und unlösbar verbunden, wobei die Anodenflächen nicht verkleinert wird. Auf diese Weise bleibt die Außenoberfläche der als Elektrolyten dienenden Mikrohohlfasem der Matrix frei für den Brennstoffzutritt. Gleichzeitig fungiert die isolierte Wendel als textiler Kontakt- und Berührungsschutz fiir die Außenoberflächen der Hohlfasern des Matrixelektrolyten. Aus den Miniatur-Brennstoff-Einzelzellen lassen sich in Gelegen und Stapeln Serienschaltungen herstellen.

Zur Ausbildung der Brennstoffzellenstacks können die einzelnen Mikrohohlfasern regellos oder nach einem Schema als Gelege zu einem Flächengebilde ausgestaltet werden. Es ist möglich, daß ganze Stacks als Wärmetauscher verwendet werden, wobei dann die Mikrohohlfasern dieser Stacks keine aktivierten Oberflächen aufweisen. Durch Stapeln der einzelnen Stacks können diese zu stabilen Modulen verarbeitet werden, wobei sich Stacks mit aktivierten und Stacks mit nicht aktivierten Mikrohohlfasern abwechseln können. Die nicht aktivierten Stacks können des weiteren die Funktionen eines Kühlers, Rekuperators für den Brennstoff oder eines Vorwärmers erfüllen. Wenn die einzelnen Brennstoffzellenstacks eine Diskusscheibenform aufweisen, so entstehen durch die Stapelung leicht handhabbare Betriebszylinder.

Für den Betrieb als Brennstoffzelle haben sich Mikrohohlfasern mit Wandstärken zwischen etwa 0,05 µm und 40 µm und mit einem Außendurchmesser von etwa 0,1 µm bis etwa 50 µm als besonders geeignet erwiesen. In Einzelfällen kann der Lumendurchmesser auch bis zu 100 µm betragen. Zum Erreichen dieser geringen Durchmesser und Wandstärken ist vorzugsweise das vorstehend beschriebene Herstellungsverfahren anzuwenden.

Bei der Verwendung der Brennstoffzelleneinheit bzw. des Brennstoffzellenstacks zur Gleichstromerzeugung durch Umwandlung der bei der Oxidation eines Brennstoffes freigesetzten chemischen Energie werden die Stoffströme des Brennstoffes und des Oxidationsmittels vorzugsweise kreuzstromförmig geführt. Dies bedeutet, daß einer der Stoffströme senkrecht zur Ebene des Filament- oder Stapelfasergeleges und der andere parallel zu dieser Ebene geführt wird. Dies steht im Gegensatz zum Betrieb der bisher bekannten Brennstoffzellen, bei denen die Elektrolyten entweder plattenförmig oder als ebene Folien ausgeführt sind und dementsprechend die Stoffströme des Brennstoffes und des Oxidationsmittels parallel oder entgegengesetzt parallel entlang den Plattenebenen geführt werden. Diese Anordnung führt bei den bekannten Brennstoffzellen zu dem Nachteil, daß z.B. die Konzentration des Sauerstoffs im Oxidationsmittel geringer wird, je weiter der zurückgelegte Weg des Oxidationsmittels entlang der Plattenebene ist. Im Gegensatz hierzu kann bei der Verwendung der erfindungsgemäßen Brennstoffzelleneinheit bzw. des Brennstoffzellenstacks das Oxidationsmittel durch die Kreuzstrom-Betriebsweise in beide Enden der jeweiligen Mikrohohlfasern eingeleitet werden. Dies bedeutet, daß entlang der gesamten Mikrohohlfaserlänge eine im wesentlichen konstante Sauerstoffkonzentration vorliegt, wodurch die Leistung der Brennstoffzelleneinheit konstantgehalten werden kann.

Wasserstoffhaltige Brennstoffe haben sich für den Betrieb des Brennstoffzellenstacks aufgrund ihrer hohen Reaktivität als besonders geeignet erwiesen.

Die Reaktionsprodukte werden vorzugsweise zum Konditionieren, Heizen, Kühlen und/oder Befeuchten der Brennstoffzelleneinheit oder anderer nachfolgender Sequenzen benutzt. Bei der nachfolgenden Sequenz kann es sich z.B. um eine nachgeschaltete Brennstoffzelleneinheit oder um ein von der Brennstoffzelle unabhängiges Element handeln. Auf diese Weise wird der Brennstoff mehrfach ausgenutzt, und es läßt sich eine besonders sparsame Verfahrensführung verwirklichen. Im Sinne der Mehrfachnutzung des Brennstoffes kann das Reaktionsprodukt der Oxidation, beispielsweise Wasser, auch fiir die Weiterverwendung in einer Klimaanlage, beispielsweise in einem Kraftfahrzeug, genutzt werden.

Für den Eintritt der Brennstoffzellenreaktion wird im allgemeinen eine erhöhte Temperatur benötigt, die auch als Anspringtemperatur der Brennstoffzelle bezeichnet wird. Diese Anspringtemperatur kann mittels Durchfluß von Heizmedien durch den Brenntstoffzellenstack in einem der Zweige der Kreuzströme erreicht werden. Bei den Heizmedien kann es sich beispielsweise um die Produkte der elektrochemischen Reaktion handeln.

Die Elektrolyt-Anspringtemperatur kann durch Erhitzen des Brennstoffes und/oder des Oxidationsmittels vor dem Einleiten derselben in die Brennstoffzelleneinheit erreicht werden. Die zum Erhitzen des Brennstoffes und/oder des Oxidationsmittels benötigte Wärme kann dabei beispielsweise durch Wässerung von Zeolith erhalten werden. Wie dies bekannt ist, erhitzen sich Zeolithe bei Wasseraufnahme auf eine Temperatur von +70°C bis +370°C. Die Zeolith-Wässerung kann wiederum vorzugsweise mit den Produkten der elektrochemischen Reaktion (Aquadestillata) stattfinden.

Die Elektrolyt-Anspringtemperatur kann auch durch Wässerung von Metallhydrid, insbesondere Eisen-, Titan-, Magnesiumhydrid, erreicht werden. Auch für diese Wässerung kann selbstverständlich das Endprodukt der elektrochemischen Reaktion verwendet werden.

Des weiteren ist es möglich, die Anspringtemperatur durch direktes oder indirektes Umwälzen von Metall-oder Bariumhydroxid-Schmelzen zu erreichen. Bariumhydroxid ist in diesem Zusammenhang besonders geeignet, da es bereits bei etwa 78°C flüssig ist und somit im gewünschten Temperaturbereich als Flüssigkeit umgewälzt werden kann. Die Metallschmelze oder Bariumhydroxidschmelze muß selbstverständlich getrennt von den Stoffströmen des Brennstoffes und des Oxidationsmittels geführt werden.

Die Elektrolyt-Anspringtemperatur läßt sich auch durch Bestrahlen der Brennstoffzelleneinheit mit Mikrowellen erreichen. In diesem Fall müssen die Brenn-stoffzelle bzw. der Brennstoffzellenstack und das Gehäuse mikrowellendurchlässig ausge-führt sein, wobei die gesamte Einheit in einen Mikrowellenabschirmkäfig zu integrieren ist, der aus Gründen der Gewichtsersparnis vorzugsweise in Leichtbauweise ausgeführt ist. Diese Form der Erwärmung läßt sich auch in Kombination mit einem der anderen genannten Heizverfahren anwenden. Alle genannten Heizverfahren weisen den Vorteil auf, daß sie drucklos ausgeführt werden können, was in konstruktionstechnischer Hinsicht von Vorteil ist.

Ein Brennstoffzellenschnellstart kann auch durch einen atmosphärischen Kata-lysatorenbrenner, d.h. einen Gas-Flüssigheizbrenner, verwirklicht werden. Es ist auch möglich, den Katalysatorenbrenner in Kombination mit einem oder mehreren der vorstehend genannten Verfahren für die Temperierung der Brennstoffzelle bzw. des Brennstoffzellenstacks einzusetzen.

Je nach Art der Aktivierung der Katalysatoroberfläche kann diese sowohl vor dem Einbau bzw. dem Zusammenbau des Brennstoffzellenstacks stattfinden als auch nach Inbetriebnahme der Brennstoffzelle, beispielsweise zur Nachbesserung. Die Außen- bzw. Innenoberflächen der Mikrohohlfaserlumen können auch wechselweise als Kathode oder Anode fungieren.

Die Brennstoffeinspritzung erfolgt vorzugsweise über Düsen, deren Öffnungen als Mikrohohlfaserlumen ausgebildet sind, die einen Durchmesser von 0,1 µm bis 100 µm aufweisen und in Guß- oder Spritzgußteilen der Düse verloren eingebracht sind. Auf diese Weise ist eine besonders genaue Dosierung des Brennstoffes sowie eine äußerst feine Verteilung desselben möglich.

Die erfindungsgemäße Brennstoffeinspritzdüse, deren Öffnungen als Mikrohohlfaserlumen ausgebildet sind, die einen Durchmesser von 0,1 µm bis 100 µm aufweisen und in Guß- oder Spritzgußteilen der Düse verloren eingebracht sind, stellt eine wesentliche Verbesserung der bisher bekannten Brennstoffeinspritzdüsen dar. Es ist möglich, diese Düse mit einer Schwankungsbreite des Außendurchmessers von lediglich etwa ± 6% durch das vorstehend beschriebene Verfahren herzustellen. Düsen mit Öffnungen der genannten Abmessungen und der angegebenen Präzision können jedoch nicht, wie dies üblich ist, durch Herstellen einer Lochung in einem Metallrohling mittels Laserbestrahlung hergestellt werden, da dieses Verfahren mit einer hohen Ungenauigkeit behaftet ist. Vielmehr werden zur Bildung des Düsenloches erfindungsgemäß Mikrohohlfasern in den Düsen-Spritzformteilen bzw. den Düsen-Gußformteilen vor deren Befüllung mit dem eigentlichen Düsenmaterial, z.B. Metall, verloren eingebracht. Die Öffnungen, die als Düsen wirken, können beispielsweise mit Hilfe von Mikrodraht, z.B. Wolfram-Glühbirnendraht, nach der Ausformung der Mikrohohlfasern in diese eingebracht werden. Hierbei wird der Draht aus dem Stangenpreßprofil herausgezogen und bildet so das Einspritzlumen.

Die Erfindung wird nachstehend anhand der beigefügten Zeichnungen näher erläutert, welche als nicht beschränkendes Beispiel gegeben sind. In den Zeichnungen zeigen:
Figur 1 eine Draufsicht auf eine erste Ausführungsform eines Brennstoffzellenstacks;
Figur 1a eine Querschnittsansicht von Figur 1;
Figur 2 eine perspektivische Darstellung einer zweiten Ausführungsform eines Brennstoffzellenstacks;
Figur 3 eine schematische Darstellung des Brennstoffzellenstacks von Figur 2, in der insbesondere die Schaltung des Brennstoffzellenstacks gezeigt ist; und
Figur 3a eine Querschnittsansicht von Figur 3 im Aufriß.

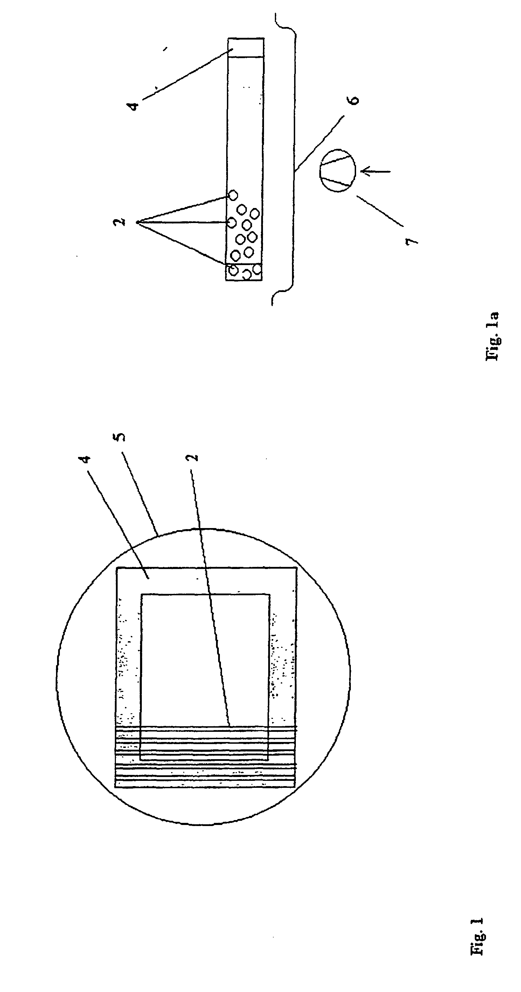

In Figur 1 ist ein Brennstoffzellenstack, der in seiner Gesamtheit mit dem Bezugszeichen 1 gekennzeichnet ist, dargestellt. Der Brennstoffzellenstack 1 ist aus Mikrohohlfasern 2 zusammengesetzt, welche die Elektrolyten bilden und als Filamentoder Stapelfasergelege regellos oder nach einem festen Schema zu einem Flächengebilde geformt sind. Der Feststoffelektrolyt liegt somit in Form einer Matrix vor.

Die Enden 3 der einzelnen Mikrohohlfasern sind offen und liegen am Außenumfang eines Rahmens 4, der hier als Rechteckrahmen ausgebildet ist, frei. Der Rahmen 4 dient der Formstabilisierung und ist vorzugsweise aus elektrisch isolierender Vergußmasse hergestellt. In diesem Fall können die Enden 3 der Mikrohohlfasem 2 bei der Herstellung des Brennstoffzellenstacks in den Rahmen eingegossen werden. Es ist jedoch auch jede beliebige andere Art der Einbettung der Mikrohohlfasern 2 in den Rahmen 4 denkbar, so auch beispielsweise eine lediglich lose Einbettung.

Die Brennstoffzellenstacks der in Figur 1 gezeigten Ausführungsform können gestapelt werden, so daß ein kompakter, stabiler Brennstoffzellenquader entsteht. Um die einzelnen Stacks oder Stackstapel herum ist ein Gehäuse 5 vorgesehen, welches in Abhängigkeit von der mechanischen, thermischen oder chemischen bzw. verfahrenstechnischen Beanspruchung der einzelnen Komponenten beispielsweise aus Kunststoff, Metall, Glas oder Keramik hergestellt sein kann. Wenn zur Beheizung der Brennstoffzelle Mikrowellenstrahlung verwendet wird, sollte für das Gehäuse ein fiir diese Strahlungsart durchlässiges Material verwendet werden. In diesem Fall ist zum Schutz der Bedienungsperson bzw. des Verwenders um die gesamte Vorrichtung einschließlich der Mikrowellenheizung ein Abschirmkäfig anzubringen. Vorzugsweise ist das Gehäuse aus einem dielektrischen Material gefertigt, so daß eine elektrische Isolation des Brennstoffzellenstacks gewährleistet ist.

Der Brennstoffzellenstack kann sowohl in Über- als auch in Unterdruckbetriebsweise betrieben werden. Im ersteren Fall muß das Gehäuse 5 für den jeweiligen Druck geeignet konstruiert werden. Hier haben sich beispielsweise zylindrische Druckgehäuse als besonders vorteilhaft erwiesen.

Figur 1a zeigt die Ausführungsform von Figur 1 im Querschnitt. In der dargestellten Ausführungsform sind die Mikrohohlfasern 2 parallel in eine Richtung angeordnet (in den Figuren 1 und 1a sind aus Gründen der Deutlichkeit nur einige der Mikrohohlfasern 2 dargestellt). Wie vorstehend bereits erwähnt, können sie jedoch auch kreuzweise zueinander angeordnet werden. Der Boden 6 des Gehäuses 5 kann beispielsweise als Klöpperboden ausgeführt sein, um den erhöhten Druckbedingungen standzuhalten. Für den Druckbetrieb wird des weiteren ein Kompressor 7 benötigt, der in Figur 1a symbolisch dargestellt ist.

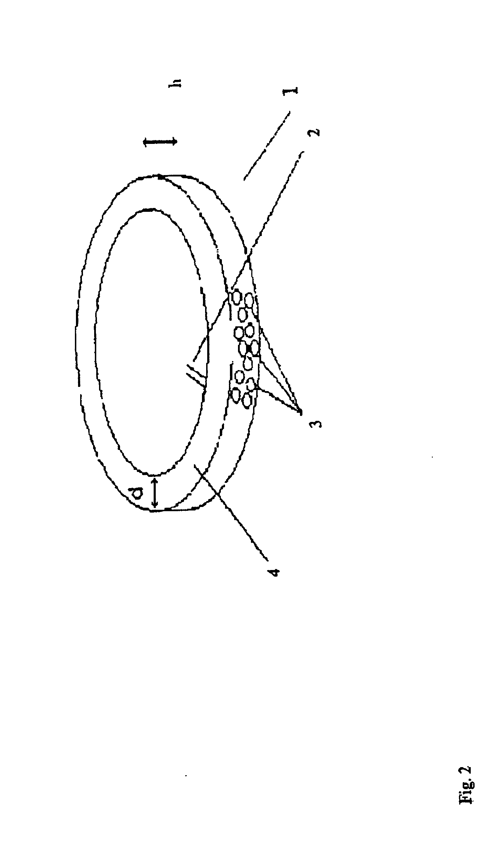

In Figur 2 ist eine weitere Ausrührungsform eines Brennstoffzellenstacks 1 dargestellt, bei der der Rahmen 4 in Form eines Diskusscheibenrings vorliegt. Die Mikrohohlfasern 2, von denen in Figur 2 aus Gründen der Deutlichkeit nur eine einzelne teilweise dargestellt ist, verlaufen entlang dem Durchmesser der Diskusscheibe, wobei die Hohlfaserenden 3 am seitlichen Umfang des Ringes freiliegen.

Als Beispiel für die Dimensionierung eines derartigen Stacks können folgende Werte angegeben werden:
- Durchmesser des Diskusscheibenringes: 230 mm
- Höhe h des Diskusscheibenringes: 5 mm
- Dicke d des Diskusscheibenringes: 35 mm
- Außendurchmesser der Mikrohohlfasern: 10 µm

Die aktive Oberfläche der Mikrohohlfasern kann insbesondere aus Molekularsieb-, Aktivkohle-, Graphit-, Alumosilikat-, Zeolith- oder spongiösen Materialien sowie Elementen und Verbindungen der 8. Nebengruppe hergestellt sein.

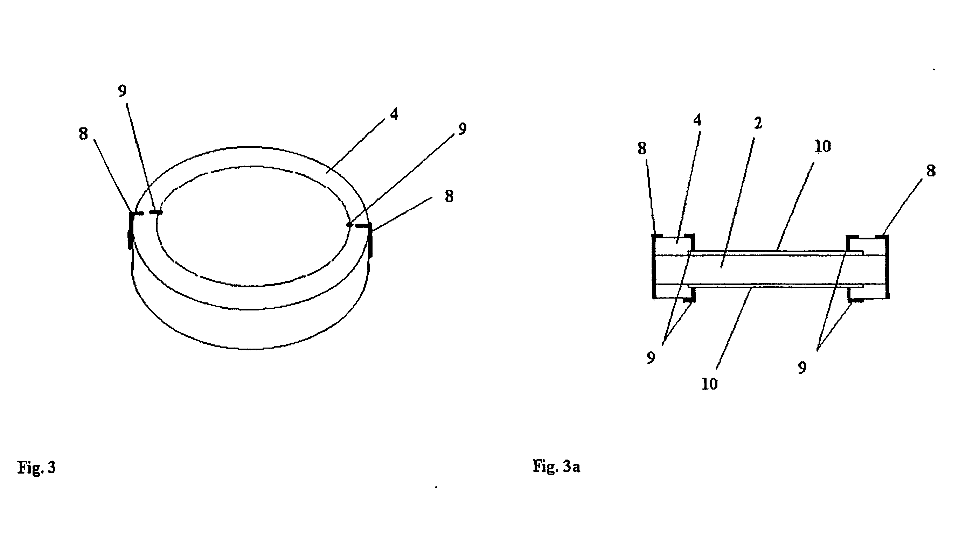

Figur 3 zeigt in perspektivischer Darstellung einen Brennstoffzellenstack 1 mit einem Rahmen 4 in Form eines Diskusscheibenringes, wie er in Figur 2 gezeigt ist. In dieser Darstellung ist zu erkennen, wie die beiden Elektroden 8, 9 des Brennstoffzellenstacks an dem dielektrischen Rahmen 4 angeordnet sein können. Gemäß der gezeigten Anbringung der Elektroden kann durch Nebeneinandersetzen mehrerer Brennstoffzellenstacks eine Serienschaltung, durch Übereinanderstapeln derselben eine Parallelschaltung verwirklicht werden.

Figur 3a zeigt den Brennstoffzellenstack von Figur 3 im Querschnitt, wobei zur Verbesserung der Deutlichkeit der Darstellung lediglich eine Mikrohohlfaser 2 dargestellt ist, die sich in den Rahmen 4 hinein erstreckt. Auf der Außenoberfläche der Mikro-hohlfaser 2 befindet sich eine der beiden Elektroden 10 der Mikrohohlfaser, die als Anode oder Kathode ausgebildet sein kann. Die Eletrode 10 der Mikrohohlfaser steht in direktem Kontakt mit der entsprechenden Elektrode 9, die am Rahmenumfang aufgebracht ist. Von der anderen der beiden Mikrohohlfaserelektroden (nicht gezeigt), die auf der Innenoberfläche der Mikrohohlfaser angebracht ist, führt eine Leitung aus dem Diskusscheibenring hinaus zur zweiten Elektrode 8 des Diskusscheibenringes.

Wenn die Anoden auf den Innenoberflächen der Mikrohohlfasern angeordnet sind, entsteht das Produkt der elektrochemischen Reaktion auf den Außenoberflächen der Fasern, die die Kathode bilden. In diesem Fall wird der Kathodenkontakt zum Gehäuse direkt erreicht, und das Oxidationsmittel, bzw. die Luft, wird durch die Mikroholfaserlagen gefiltert.

Der Brennstoffzellenstack ist unter anderem als atmosphärische Brennstoffzelle mit geschlossener Brennstoffzuführung und offener Abführung des Reaktionsproduktes, z.B. Wasser, einsetzbar. Er kann des weiteren sowohl im Unter- als auch im Überdruckverfahren betrieben werden, wobei sich die erste Variante insbesondere fiir die Einsatz in einem Kraftfahrzeug eignet, gemäß dem der Fahrtwind den Unterdruck im Brennstoffzellenstack gewährleistet. Die einzelnen Mikrohohlfasern sind selbsttragend und dank ihrer textilen Eigenschaften äußerst flexibel und widerstandsfähig. Aufgrund der dünnen Wandstärken der Mikrohohlfaserelektrolyten können niedrige Anspringtemperaturen verwirklicht werden. Die erfindungsgemäßen Mikrohohlfasern lassen sich mit einer Genauigkeit von etwa ± 6% in bezug auf die Schwankungen des Außendurchmessers und der Wandstärke herstellen, so daß eine konstante Betriebsweise gewährleistet wird.

Die im Rahmen der Anwendung des Brennstoffzellenstacks beschriebene Einspritzdüse eignet sich auch fiir den Einsatz in anderen Bereichen, insbesondere im Zusammenhang mit Otto- oder Dieselmotoren, in Carnot-Kreisprozessen oder anderen ähnlichen Prozessen bzw. Maschinen.

## Patentansprüche

1. Brennstoffeinspritzdüse, **dadurch gekennzeichnet, daß** die Öffnungen der Düse als Mikrohohlfaserlumen ausgebildet sind, die einen Durchmesser von 0,1 µm bis 100 µm aufweisen und in den Guß- oder Spritzgußteilen der Düse verloren eingebracht sind.

## Claims

1. Injection jet, **characterized in that** the jet openings are in the shape of micro hollow fibre lumens with a diameter of 0.1 µm to 100 µm and embedded in the moulded or injection moulded parts of the jet in a non-recoverable manner.

## Revendications

1. Jet d'injection, **caractérisé en ce que** les orifices du jet ont la forme d'un lumen de microfibres creuses qui ont un diamètre de 0.1 µm à 100 µm et sont incorporées dans les pièces moulées ou injectées du jet de façon non-récupérable.
